# EUROPÄISCHE PATENTSCHRIFT

(11) **EP 1 342 220 B1**
(45) Veröffentlichungstag und Bekanntmachung des Hinweises auf die Patenterteilung: **19.05.2004**
(21) Anmeldenummer: 01270978.8
(22) Anmeldetag: 26.10.2001
(51) Int. Cl.: G08B 25/10

(54) **VERFAHREN ZUR VERWALTUNG EINER VIELZAHL VON KOMPONENTEN DER GEBÄUDESTEUERUNG ODER/UND DER VERBRAUCHSZÄHLUNG IN GEBÄUDEN**
METHOD FOR MANAGING A PLURALITY OF COMPONENTS FOR THE CONTROL OF BUILDINGS AND/OR CONSUMPTION METERING IN BUILDINGS
PROCEDE POUR LA GESTION D'UNE MULTITUDE DE COMPOSANTS DE COMMANDE DE BATIMENT OU DE CALCUL DE CONSOMMATION DANS DES BATIMENTS

(30) Priorität: 11.12.2000 DE 10061575
(43) Veröffentlichungstag der Anmeldung: 10.09.2003
(73) Patentinhaber: Ziegler, Horst Prof. Dr., D-33100 Paderborn (DE)
(72) Erfinder: Ziegler, Horst Prof. Dr., D-33100 Paderborn (DE)
(74) Vertreter: Tiesmeyer, Johannes, Dr.
(86) Internationale Anmeldenummer: PCT/EP2001/012439
(87) Internationale Veröffentlichungsnummer: WO 2002/049270

(56) Entgegenhaltungen:
- WO-A-00/52658
- WO-A-00/57375

## Beschreibung

Die Erfindung befaßt sich mit der Verwaltung von Komponenten der Gebäudesteuerung oder/und der Verbrauchszählung in Gebäuden.

Im Rahmen der Verwaltung von Verbrauchszählern, die zur Messung des Verbrauchs von Wasser, Gas, Strom, Wärme usw. oft in großer Vielzahl in Gebäuden installiert sind, muß der Verwalter oder Betreiber dieser Verbrauchszähler zu Zwecken der Zählerablesung und der Verbrauchsabrechnung den genauen Einbauort der Zähler kennen, um den jeweils gemessenen Verbrauch eindeutig einem bestimmten Nutzer zuordnen zu können. Auch zu Wartungszwecken muß der genaue Einbauort der Zähler bekannt sein, damit der mit der Wartung beauftragte Reparateur die Zähler auch auffinden kann. In der Regel sind diese Geräte bereits mit einem Code versehen, der den einzelnen Zähler identifiziert. Der Gerätecode enthält aber naturgegebenermaßen keinen Hinweis auf den Einbauort des Zählers.

Auch auf dem Gebiet der Gebäudesteuerung und insbesondere der Gebäudeautomatisierung ist es oftmals notwendig, den Einbauort der einzelnen Steuer- bzw. Automatisierungkomponenten genau zu kennen. Bei Alarmgebern, wie z.B. Rauchmeldern wird man sich eine exakte Ortskenntnis wünschen, um die Ausbruchsstelle eines in einem Gebäude ausgebrochenen Feuers genau lokalisieren zu können und eine gebäudeinterne Sprinkleranlage gezielt aktivieren zu können. Ein anderes Beispiel sind Temperatursensoren, bei denen das Wissen um den genauen Einbauort die gezielte Aktivierung einer bestimmten Fensterjalousie oder die gezielte Steuerung einer Heizung in einem bestimmten Raum ermöglicht. Diese beiden Beispiele zeigen auch, daß nicht nur die genaue Position der signalgebenden Komponenten interessant ist, sondern daß zugleich auch der genaue Einbauort der Aktoren bekannt sein sollte, die zur Ausführung der jeweiligen Steuerfunktion benötigt werden, also z.B. Rolladenantriebe oder elektronische Thermostatventile.

Bisherige Praxis ist es, den Einbauort solcher Komponenten der Verbrauchszählung und Gebäudesteuerung über nutzungsbezogene oder administrative Beschreibungen des Gebäudes, eines Raums oder einer Wohnung festzulegen, beispielsweise in der Form "Liegenschaft uvwxyz", "Münchner-Straße xy", "Wohnung Erdgeschoß links", "Bad" oder ähnliches. Bei diesen Angaben besteht das Problem, daß durch Nutzungswechsel der Räume in einer Wohnung, Straßenumbenennungen oder Änderungen der Liegenschaftsbeschreibungen im Grundbuch die Ortsbeschreibung der Komponenten fehlerhaft werden kann. Außerdem ist es durchaus nicht unwahrscheinlich, daß der Monteur, der die jeweilige Komponente im Gebäude installiert, Fehler bei der Beschreibung des Einbauorts der Komponente begeht, beispielsweise indem er irrtümlich ein falsches Stockwerk angibt.

Aufgabe der Erfindung ist es demnach, zur Verwaltung von Komponenten der Gebäudesteuerung oder/und der Verbrauchszählung in Gebäuden eine weniger fehleranfällige Form der Ortsbeschreibung dieser Komponenten anzugeben.

Bei der Lösung dieser Aufgabe geht die Erfindung aus von einem Verfahren zur Verwaltung einer Vielzahl von Komponenten der Gebäudesteuerung oder/und der Verbrauchszählung in Gebäuden, wobei bei diesem Verfahren für jede dieser Komponenten eine Ortsinformation über den Einbauort der jeweiligen Komponente in das jeweilige Gebäude in Zuordnung zu einer Identifikationskennung für diese Komponente gespeichert wird. Erfindungsgemäß ist dabei vorgesehen, daß für jede Komponente durch insbesondere tragbare Ortungsmittel eine geografische Position des Einbauorts der jeweiligen Komponente ermittelt wird und diese geografische Position als Ortsinformation in Zuordnung zu der Identifikationskennung der jeweiligen Komponente gespeichert wird.

Durch Ortung kann eine auf absoluten oder relativen geografischen Daten beruhende Positionsbeschreibung des Einbauorts erhalten werden, die auch dann volle Gültigkeit und Richtigkeit beibehält, wenn sich die administrative Ortsbeschreibung des betreffenden Gebäudes, also beispielsweise der Straßenname mit Hausnummer oder der Liegenschaftscode, ändert oder ein Nutzungswechset stattfindet. Fehler, die daraus entstehen können, daß sich der Monteur beim Aufschreiben des Einbauorts beispielsweise über das Stockwerk oder die Hausnummer irrt, entfallen zudem bei Ortung. Die Ortungsmittel können mit gleichbleibender Genauigkeit eine irrtumsfreie Angabe über den jeweiligen Einbauort liefern. Geeignete tragbare Ortungsgeräte, die lediglich in die Nähe des Einbauorts gebracht werden müssen und an denen sodann das Ergebnis abgelesen werden kann, sind handelsüblich erhältlich.

Für mindestens eine Teilanzahl der Komponenten, insbesondere für jede Komponente, kann die Ermittlung der geografischen Position des Einbauorts der jeweiligen Komponente wenigstens teilweise auf Funk-Ortung beruhen. Beispielsweise kann die Funk-Ortung unter Verwendung eines satellitengestützten Navigationssystems durchgeführt werden. Ein gängiges derartiges Navigationssystem ist das sogenannte Global-Positioning-System (GPS), für das auf dem Markt vielfältige tragbare Ortungsgeräte angeboten werden. Durch differenzielle GPS-Ortung können dabei sogar höchste Genauigkeiten erzielt werden. Es ist aber auch denkbar, die Funk-Ortung unter Verwendung eines drahtlosen Telekommunikationsnetzes durchzuführen. Hierbei könnte eine Ortung auf Grundlage der Funklaufzeiten zwischen einem mobilen Endgerät und einer oder mehreren Basisstationen des Telekommunikationsnetzes erfolgen. Selbstverständlich sind auch beliebige andere Funk-Ortungssysteme verwendbar, die geografische Absolut- oder Relativpositionsangaben liefern können.

Funk-Ortung ist nicht die einzige ortungstechnische Möglichkeit, um die Einbaupositionen der zu verwaltenden Komponenten zu ermitteln. Für mindestens eine Teilanzahl der Komponenten kann die Ermittlung der geografischen Position des Einbauorts der jeweiligen Komponente wenigstens teilweise auch auf Inertial-Ortung beruhen. Unter Inertial-Ortung wird hierbei jedes Ortungsverfahren verstanden, bei dem der Monteur oder eine andere mit der Positionsermittlung beauftragte Person ein inertiales Messsystem mit sich trägt und aus den von dem Messsystem gelieferten Messdaten geografische Positionsangaben gewonnen werden. Für die Inertial-Ortung kommen vorzugsweise mechanische oder/und optische Gyroskopanordnungen in Frage. Mechanische Kreisel und optische, nach dem Sagnac-Effekt arbeitende Kreisel sind marktgängige Produkte. Zusätzlich oder alternativ kann das für die Inertial-Ortung verwendete Messsystem auch andere inertiale Sensoren enthalten, etwa Beschleunigungssensoren oder/und Neigungsmesser. Um aus den Messdaten des inertialen Messsystems Informationen über Länge und Richtung der zurückgelegten Wege zu erhalten, wird ein geeignetes Inertial-Ortungsgerät zweckmäßigerweise eine schaltungstechnisch realisierte Integrationseinheit aufweisen, die durch elektrische oder nummerische Integration der gemessenen Drehraten oder anderer Größen die gewünschten Weginformationen bereitstellt.

Besonders vorteilhaft ist es, wenn für mindestens eine Teilanzahl der Komponenten zur Ermittlung der geografischen Position des Einbauorts der jeweiligen Komponente mindestens zwei verschiedene Ortungsverfahren kombiniert werden. Auf diese Weise kann erreicht werden, dass etwa vorhandene Schwächen eines Ortungsverfahrens weniger stark zum Tragen kommen und sich stattdessen die von den verschiedenen Ortungsverfahren gebotenen Vorteile optimal ergänzen. Dies ermöglicht besonders genaue und zuverlässige Ergebnisse. Bei einer bevorzugten Weiterbildung dieses Gedankens der Kombination verschiedener Ortungsverfahren wird mittels eines ersten Ortungsverfahrens eine geografische Position für einen im Abstand vom Einbauort der jeweiligen Komponente liegenden Referenzort ermittelt. Ausgehend von der ermittelten Position dieses Referenzorts wird sodann mittels eines zweiten Ortungsverfahrens die geografische Position des Einbauorts der jeweiligen Komponente ermittelt. Diese Vorgehensweise empfiehlt sich insbesondere, wenn als erstes Ortungsverfahren auf ein Funk-Ortungsverfahren zurückgegriffen wird. Funk-Ortungsverfahren können nämlich unter dem gravierenden Nachteil leiden, dass innerhalb von Gebäuden eine derartig starke Dämpfung der Funksignale auftritt, dass überhaupt keine oder zumindest keine akzeptable Funk-Ortung mehr möglich ist.

Als Lösungsweg für dieses Problem kann deshalb die Funk-Ortung durch ein anderes Ortungsverfahren ergänzt werden, das innerhalb der Gebäude eingesetzt wird. Dazu eignen sich inertiale Ortungsverfahren, deren Genauigkeit freilich über große Wege oder lange Zeiträume oft ungenügend ist. Es empfiehlt sich deshalb, als Referenzort einen zwar außerhalb der Innenräume des Gebäudes liegenden, jedoch gebäudenahen Ort zu wählen, von dem aus der Einbauort der jeweiligen Komponente nicht allzu weit entfernt ist. Günstigerweise kann ein Gebäudeeingang als derartiger Referenzort gewählt werden. Wird dann mittels Funk-Ortung eine absolute und langzeitstabile Positionsangabe über den Referenzort ermittelt und werden anschließend ab dem Referenzort bis zu den Montageorten der zu verwaltenden Komponenten die Koordinatenänderungen mittels eines funkunabhängigen, inertialen Ortungsverfahrens bestimmt, so lassen sich die Einbauorte der Komponenten auch bei Vorhandensein von Funklöchern mit guter Genauigkeit ermitteln.

Bevorzugt wird für mindestens eine Teilanzahl der Komponenten die geografische Position des Einbauorts der jeweiligen Komponente als dreidimensionale Position ermittelt. Dies ist zum Beispiel sinnvoll bei mehrstöckigen Gebäuden, wo Zähler oder/und Sensoren oder/und Aktoren in verschiedenen Stockwerken eingebaut werden.

Zweckmäßigerweise wird man für mindestens eine Teilanzahl der Komponenten die ermittelte geografische Position des Einbauorts der jeweiligen Komponente in Zuordnung zu deren Identifikationskennung in einer gemeinsamen Verwaltungszentrale für diese Teilanzahl der Komponenten speichern. Bevorzugt sollten ferner die geografische Position des betreffenden Gebäudes, also geografische Ortsbeschreibungs-Koordinaten des Gebäudes bzw. des Grundrisses des Gebäudes in Zuordnung zu den Positionsbeschreibungsdaten der Komponenten gespeichert werden. Die Gebäudekoordinaten bzw. Grundrisskoordinaten können z.B. per GPS-Navigation ermittelt werden. Die Verwaltungszentrale kann beispielsweise bei der Abrechnungsfirma liegen, die für die Ablesung und Abrechnung der in einem Gebäude oder in einem Gebäudeensemble installierten Verbrauchszähler verantwortlich ist. Im Fall von Steuer- oder Automatisierungskomponenten kann sie beispielsweise auch von einer Steuerzentrale für ein oder mehrere Gebäude gebildet sein. In der Verwaltungszentrale können die geografischen Positionen und die Identifikationskennungen in einer elektronischen Datenbank oder/und in Papierform gespeichert werden, gewünschtenfalls zusätzlich in Zuordnung zu Informationen über den oder die Nutzer der Gebäuderäume oder/und über die Nutzungsart der Gebäuderäume usw.

Alternativ oder zusätzlich zur Speicherung in einer Verwaltungszentrale kann vorgesehen sein, daß für mindestens eine Teilanzahl der Komponenten die ermittelte geografische Position des Einbauorts der jeweiligen Komponente gewünschtenfalls in Zuordnung zu deren Identifikationskennung in einem elektronischen Speicher dieser Komponente gespeichert wird, wobei jede Komponente dieser Teilanzahl dazu eingerichtet ist, ihre in dem Speicher gespeicherte geografische Position gewünschtenfalls zusammen mit ihrer Identifikationskennung über eine Signalverbindung mindestens einer anderen der Komponenten oder/und einer Leitstelle für die Gebäudesteuerung bzw. Verbrauchszählung mitzuteilen. Zusammen mit der Übermittlung eines Zählerstands oder eines Sensorsignals kann die jeweilige Komponente dann ihre geografische Position und gewünschtenfalls ihre Identifikationskennung einer anderen Komponente oder der Leitstelle mitteilen. Auf diese Weise kann zum Beispiel eine automatisierte Verbrauchsablesung eingerichtet werden.

Um die ermittelte geografische Position in die jeweilige Komponente oder die Verwaltungszentrale einzuspeichern, kann sie in einem mobilen elektronischen Zwischenspeicher zwischengespeichert werden und sodann von dem Zwischenspeicher über eine elektrische oder optische oder funktechnische Schnittstelle zu der Verwaltungszentrale übermittelt bzw. in den Speicher der Komponente eingeschrieben werden. Der Zwischenspeicher kann beispielsweise von einem Notebook oder PDA (Personal Digital Assistant) gebildet sein.

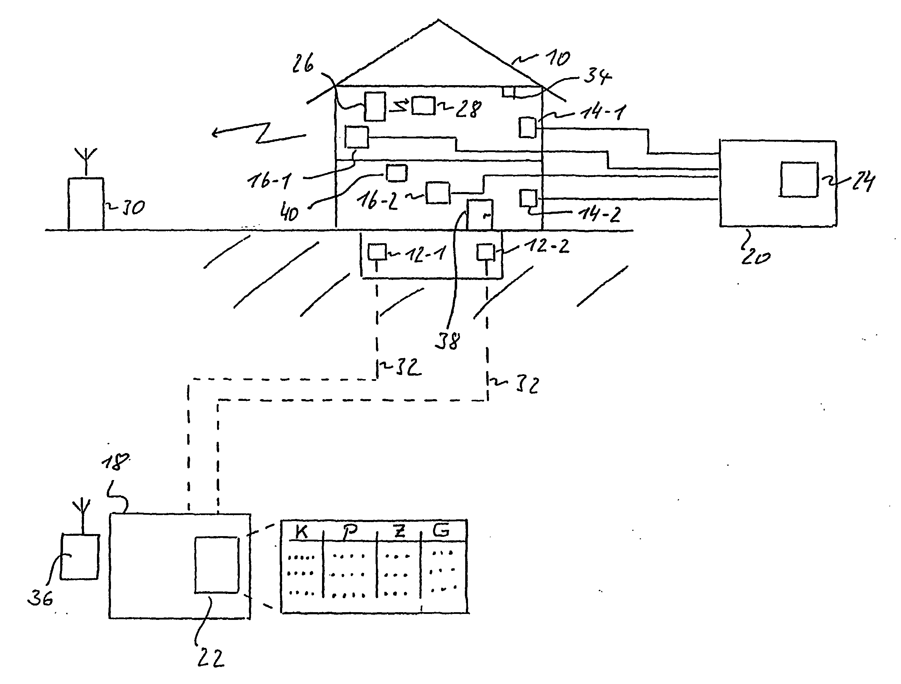

Ein Ausführungsbeispiel der Erfindung wird im Folgenden anhand der beigefügten einzigen Zeichnung näher erläutert. Diese zeigt schematisch ein Gebäude 10, in das mehrere (hier zwei) Verbrauchszähler 12-1, 12-2, mehrere (hier zwei) Sensoren 14-1, 14-2 und mehrere (hier zwei) Aktoren 16-1, 16-2 eingebaut sind. Die Verwaltung der Verbrauchszähler 12-1, 12-2 erfolgt in einer Abrechnungszentrale 18, die sich bei dem für die Zählerablesung und Verbrauchsabrechnung zuständigen Unternehmen befindet. Die Sensoren 14-1, 14-2 und die Aktoren 16-1, 16-2 stehen in Signalverbindung mit einer Steuerzentrale 20 für die Gebäudesteuerung, wobei diese Signalverbindung im.herkömmlichen Fall durch elektrische Leitungen realisiert sein kann, gegebenfalls aber auch optischer oder funktechnischer Natur sein kann. Über die Signalverbindung liefern die Sensoren 14-1, 14-2 ihre Sensorsignale an die Steuerzentrale 20, die diese Sensorsignale auswertet und abhängig von ihnen geeignete Steuersignale an die Aktoren 16-1, 16-2 schickt. Die Steuerzentrale 20 kann beispielsweise von einem innerhalb des Gebäudes 10 untergebrachten Prozeßrechner gebildet sein, der vollautomatisiert, d.h. ohne Eingriff durch eine Bedienungsperson, die Aktoren 16-1, 16-2 steuert. Sie kann aber beispielsweise auch fern des Gebäudes 10 angeordnet sein und als Bedienungsstand ausgebildet sein, bei dem eine Bedienungsperson nach Maßgabe der Sensorsignale die Aktoren 16-1, 16-2 steuert. Gewünschtenfalls können die Abrechnungszentrale 18 und die Steuerzentrale 20 für eine Mehrzahl von Gebäuden zuständig sein.

In der Abrechnungszentrale 18 ist in Papierform oder in elektronischer Form eine Koinzidenztabelle 22 angelegt, welche für jeden der Verbrauchszähler 12-1, 12-2 eine den jeweiligen Zähler eindeutig identifizierende Gerätekennung K, eine Positionsangabe P über den Einbauort des jeweiligen Zählers und gewünschtenfalls geografische Koordinaten G des Gebäudes 10 sowie Zusatzinformationen Z enthält, die beispielsweise angeben, welchem Nutzer der durch den jeweiligen Zähler ermittelte Strom-, Gas-, Wasserverbrauch oder dergl. in Rechnung zu stellen ist. Die Positionsangabe P ist eine rein geografische, insbesondere dreidimensionale Ortsangabe, beispielsweise unter Verwendung geografischer Grad-, Minuten- und Sekundenkoordinaten. Sonstige nichtgeografische Erläuterungen des Einbauorts, die sich beispielsweise auf einen in bestimmter Weise genutzten Raum beziehen (z.B. "Küche") oder die sich auf eine bestimmte Wohnung oder eine bestimmte Etage im Gebäude beziehen, können gewünschtenfalls zusätzlich unter der Rubrik Zusatzinformationen Z gespeichert sein.

Eine ähnliche Koinzidenztabelle 24 für die Sensoren 14-1, 14-2 und die Aktoren 16-1, 16-2 ist in der Steuerzentrale 20 gespeichert, so dass die Steuerzentrale 20 anhand der Positionsdaten eine Zuordnung von einem Sensor (z.B. 14-1) zu einem Aktor (z.B. 16-1) treffen kann, beispielsweise um den Aktor 16-1 in Abhängigkeit von Messsignaten des Sensors 14-1 zu steuern.

Zur Ermittlung der Positionsangabe P kann - sofern keine Funklöcher zu befürchten sind - bei der Installation oder bei der Inbetriebnahme der jeweiligen Komponente (also des Zählers, Sensors oder Aktors) vom Handwerker ein tragbares Funk-Ortungsgerät 26 nahe an den Einbauort der Komponente gebracht werden. Die von dem Ortungsgerät 26 ermittelte absolute oder relative Ortinformation kann dann optisch, elektrisch oder funktechnisch in einen tragbaren Zwischenspeicher 28, etwa ein PDA, übertragen und dort zweckmäßigerweise in Zuordnung zu der Kennung K der jeweiligen Komponente zwischengespeichert werden. Auf diese Weise kann der Handwerker für alle Zähler, Sensoren und Aktoren in dem Gebäude 10 deren Positionen ermitteln und zwischenspeichern. Er trägt den Zwischenspeicher 28 dann zur Abrechnungszentrale 18 bzw. zur Steuerzentrale 20, wo er die gespeicherten Positionsangaben zusammen mit den Gerätekennungen aus dem Zwischenspeicher 28 ausliest und in die Koinzidenztabelle 22 bzw. 24 einspeichert. Dies kann im Fall einer elektronischen Koinzidenztabelle wiederum auf optischem, elektrischem oder funktechnischem Weg erfolgen. Falls das Ortungsgerät 26 selbst mit einem Speicher ausgestattet ist, kann sogar auf den gesonderten Zwischenspeicher 28 verzichtet werden.

Das Ortungsgerät 26 kann beispielsweise ein kleinformatiges GPS-Handgerät sein, wie es etwa aus dem Bergsteigerbereich bekannt ist. Bei GPS-Ortung kann insbesondere ein differentielles Ortungsverfahren (Differential-GPS) zum Einsatz kommen, das zentimetergenaue Ortslokalisierungen erlaubt. Es kann aber auch eine Ortung auf Grundlage der Messung von Funklaufzeiten zwischen dem Ortungsgerät 26 und einer bei 30 angedeuteten Bodenfunkstation eines erdgestützten Funksystems zur Anwendung kommen. Insbesondere kann es sich bei dem Funksystem dabei um ein drahtloses Telekommunikationsnetz handeln, etwa nach GSM- oder UMTS-Standard.

Es ist denkbar, daß die Zähler 12-1, 12-2 dazu eingerichtet sind, ihre Zählerstände elektrisch, optisch oder funktechnisch zu der Abrechnungszentrale 18 zu übermitteln, wie gestrichelt durch Signallinien 32 angedeutet. In diesem Fall ist es vorstellbar, die ortungstechnisch ermittelte geografische Position in den jeweiligen Zähler einspeichern, so daß dieser seinen Zählerstand zusammen mit seiner Position und gewünschtenfalls seiner Kennung über die Signalverbindung 32 an die Abrechnungszentrale 18 übermitteln kann. Vergleichbares gilt für die Sensoren 14-1, 14-2.

Mit 34 ist in der Figur ein Alarmgeber, beispielsweise ein Feuermelder, gekennzeichnet, welcher im Alarmfall ein Funksignal an eine Alarmzentrale 36 abgibt, um einen Hilfsdienst, etwa die Feuerwehr, anzufordern. Mit dem Alarmsignal werden Informationen über die zuvor durch Ortung ermittelten und in einen Speicher des Alarmgebers 34 gespeicherten geografischen Ortskoordinaten des Alarmgebers 34 an die Alarmzentrale 36 übermittelt, so dass der betreffende Hilfsdienst anhand dieser Ortskoordinaten zu der Alarmstelle bei 34 geführt werden kann. Selbstverständlich kommt es nicht darauf an, dass die Signalübertragung vom Alarmgeber 34 zur Alarmzentrale 36 per Funk erfolgt. Alternativ könnte eine drahtgebundene Signalübertragung über betreffende Leitungen vorgesehen sein. Ganz allgemein können die in der Abrechnungszentrale 18 und/oder in der Steuerzentrale 20 gespeicherten geografischen Positionsdaten im Bedarfsfall dazu verwendet werden, Wartungspersonal oder einen Störungsdienst zu einer betreffenden Komponente 12-1, 12-2, 14-1, 14-2, 16-1, 16-2, 34 zu leiten, etwa unter Verwendung eines üblichen Navigationssystems, z.B. des GPS-Navigationssystems. Der zur Wartung, Reparatur oder zum Austausch einer betreffenden Komponente 12-1....34 angeforderte Monteur wird somit in die Lage versetzt, den Ort der Komponente rasch und zuverlässig zu finden.

Falls innerhalb des Gebäudes 10 Funklöcher zu befürchten sind und dementsprechend dort ein Funktionsausfall des Funk-Ortungsgeräts 26 auftreten kann, ist es zur Ermittlung der Positionsangabe P alternativ möglich, zunächst einen bei 38 angedeuteten Eingangsbereich des Gebäudes 10 oder einen anderen, von solchen Funklöchern nicht betroffenen gebäudenahen Ort mit dem Funk-Ortungsgerät 26 zu vermessen. Anschließend kann die mit der Positionsermittlung beauftragte Person mit einem Inertiat-Ortungsgerät 40 die innerhalb des Gebäudes 10 liegende Strecke vom Eingangsbereich 38 bis zur jeweiligen Komponente vermessen. Durch Kombination der bei der Funk-Ortung und bei der Inertial-Ortung gewonnenen Positionsdaten kann der Einbauort der jeweiligen Komponente dann leicht bestimmt werden. Es versteht sich, dass die Funktionen der Funk-Ortung und der Inertial-Ortung auch in einem einzigen Gerät zusammengefasst sein können, so dass der Handwerker nicht zwei getrennte Geräte mit sich führen muss.

## Patentansprüche

1. Verfahren zur Verwaltung einer Vielzahl von Komponenten (12-1, 12-2, 14-1, 14-2, 16-1, 16-2, 34) der Gebäudesteuerung oder/und der Verbrauchszählung in Gebäuden, wobei bei diesem Verfahren für jede dieser Komponenten (12-1, 12-2, 14-1, 14-2, 16-1, 16-2, 34) eine Ortsinformation (P) über den Einbauort der jeweiligen Komponente in das jeweilige Gebäude (10) in Zuordnung zu einer Identifikationskennung (K) für diese Komponente gespeichert wird,
**dadurch gekennzeichnet, dass** für jede Komponente (12-1, 12-2, 14-1, 14-2, 16-1, 16-2, 34) durch insbesondere tragbare Ortungsmittel (26, 40) eine geografische Position (P) des Einbauorts der jeweiligen Komponente ermittelt wird und diese geografische Position (P) als Ortsinformation in Zuordnung zu der Identifikationskennung (K) der jeweiligen Komponente gespeichert wird.

2. Verfahren nach Anspruch 1,
**dadurch gekennzeichnet, dass** für mindestens eine Teilanzahl der Komponenten (12-1, 12-2, 14-1, 14-2, 16-1, 16-2, 34), insbesondere jede Komponente, die Ermittlung der geografischen Position (P) des Einbauorts der jeweiligen Komponente wenigstens teilweise auf Funk-Ortung beruht.

3. Verfahren nach Anspruch 2,
**dadurch gekennzeichnet, dass** die Funk-Ortung unter Verwendung eines satellitengestützten Navigationssystems durchgeführt wird.

4. Verfahren nach Anspruch 2 oder 3,
**dadurch gekennzeichnet, dass** die Funk-Ortung unter Verwendung eines drahtlosen Telekommunikationsnetzes durchgeführt wird.

5. Verfahren nach einem der Ansprüche 1 bis 4,
**dadurch gekennzeichnet, dass** für mindestens eine Teilanzahl der Komponenten (12-1, 12-2, 14-1, 14-2, 16-1, 16-2, 34) die Ermittlung der geografischen Position (P) des Einbauorts der jeweiligen Komponente wenigstens teilweise auf Inertial-Ortung beruht.

6. Verfahren nach Anspruch 5,
**dadurch gekennzeichnet, dass** zur Inertialortung eine mechanische oder/und optische Gyroskopanordnung verwendet wird.

7. Verfahren nach einem der Ansprüche 1 - 6,
**dadurch gekennzeichnet, dass** für mindestens eine Teilanzahl der Komponenten (12-1, 12-2, 14-1, 14-2, 16-1, 16-2, 34) zur Ermittlung der geografischen Position (P) des Einbauorts der jeweiligen Komponente mindestens zwei verschiedene Ortungsverfahren kombiniert werden.

8. Verfahren nach Anspruch 7,
**dadurch gekennzeichnet, dass** mittels eines ersten Ortungsverfahrens, insbesondere mittels Funk-Ortung, eine geografische Position für einen im Abstand vom Einbauort der jeweiligen Komponente liegenden Referenzort (38) ermittelt wird und ausgehend von der ermittelten Position dieses Referenzorts sodann mittels eines zweiten Ortungsverfahrens, insbesondere mittels Inertial-Ortung, die geografische Position (P) des Einbauorts der jeweiligen Komponente ermittelt wird.

9. Verfahren nach Anspruch 8,
**dadurch gekennzeichnet, dass** als Referenzort ein außerhalb der Innenräume des Gebäudes (10), in das die jeweilige Komponente eingebaut ist, liegender gebäudenaher Ort gewählt wird, vorzugsweise ein Gebäudeeingang (38).

10. Verfahren nach einem der Ansprüche 1 bis 9,
**dadurch gekennzeichnet, dass** für mindestens eine Teilanzahl der Komponenten (12-1, 12-2, 14-1, 14-2, 16-1, 16-2, 34) die geografische Position (P) des Einbauorts der jeweiligen Komponente als dreidimensionale Position ermittelt wird.

11. Verfahren nach einem der Ansprüche 1 bis 10,
**dadurch gekennzeichnet, dass** für mindestens eine Teilanzahl der Komponenten (12-1, 12-2, 14-1, 14-2, 16-1, 16-2, 34) die ermittelte geografische Position (P) des Einbauorts der jeweiligen Komponente in Zuordnung zu deren Identifikationskennung (K) in einer gemeinsamen Verwaltungszentrale (18, 20) für diese Teilanzahl der Komponenten gespeichert wird.

12. Verfahren nach einem der Ansprüche 1 bis 11,
**dadurch gekennzeichnet, dass** für mindestens eine Teilanzahl der Komponenten (12-1, 12-2, 14-1, 14-2, 16-1, 16-2, 34) die ermittelte geografische Position (P) des Einbauorts der jeweiligen Komponente gewünschtenfalls in Zuordnung zu deren Identifikationskennung (K) in einem elektronischen Speicher dieser Komponente gespeichert wird, wobei jede Komponente dieser Teilanzahl dazu eingerichtet ist, ihre in dem Speicher gespeicherte geografische Position (P) gewünschtenfalls zusammen mit ihrer Identifikationskennung (K) über eine Signalverbindung (32) mindestens einer anderen der Komponenten oder/und einer Leitstelle (18, 20) für die Gebäudesteuerung bzw. Verbrauchszählung oder/und einer Alarmzentrale (36) mitzuteilen.

13. Verfahren nach Anspruch 11 oder 12,
**dadurch gekennzeichnet, dass** die ermittelte geografische Position (P) des Einbauorts der jeweiligen Komponente (12-1, 12-2, 14-1, 14-2, 16-1, 16-2, 34) in einem mobilen elektronischen Zwischenspeicher (28) zwischengespeichert wird und sodann von dem Zwischenspeicher (28) über eine elektrische oder optische oder funktechnische Schnittstelle zu der Verwaltungszentrale (18, 20) übermittelt bzw. in den Speicher der Komponente eingeschrieben wird.

14. Verfahren nach einem der vorhergehenden Ansprüche,
**dadurch gekennzeichnet, dass** wenigstens eine der Komponenten ein Alarmsensor (34) ist, der dazu eingerichtet ist, im Alarmfall seine geografischen Positionsdaten zusammen mit einer Alarmmeldung über eine Kommunikationsverbindung an eine Alarmzentrale (36) zu senden, so dass Hilfspersonal anhand der übertragenen Positionsdaten zu der Alarmstelle (bei 34) geführt werden kann.

## Claims

1. Method for managing a multiplicity of buildings-control and/or consumption-metering components (12-1, 12-2, 14-1, 14-2, 16-1, 16-2, 34) in buildings, where this method involves each of these components (12-1, 12-2, 14-1, 14-2, 16-1, 16-2, 34) having stored for them a location information item (P), regarding the respective component's installation location in the respective building (10), in association with an identification identifier (K) for this component,
**characterized in that** (in particular) portable position-finding means (26, 40) ascertain for each component (12-1, 12-2, 14-1, 14-2, 16-1, 16-2, 34) a geographical position (P) for the respective component's installation location, and this geographical position (P) is stored as location information in association with the respective component's identification identifier (K).

2. Method according to Claim 1,
**characterized in that** for at least a portion of the components (12-1, 12-2, 14-1, 14-2, 16-1, 16-2, 34), particularly for each component, the ascertainment of the geographical position (P) of the respective component's installation location is based at least in part on radio position-finding.

3. Method according to Claim 2,
**characterized in that** the radio position-finding is carried out using a satellite-aided navigation system.

4. Method according to Claim 2 or 3,
**characterized in that** the radio position-finding is carried out using a wireless telecommunication network.

5. Method according to one of Claims 1 to 4,
**characterized in that** for at least a portion of the components (12-1, 12-2, 14-1, 14-2, 16-1, 16-2, 34), the ascertainment of the geographical position (P) of the respective component's installation location is based at least in part on inertial position-finding.

6. Method according to Claim 5,
**characterized in that** a mechanical and/or optical gyroscope arrangement is used for the inertial position-finding.

7. Method according to one of Claims 1 - 6,
**characterized in that** for at least a portion of the components (12-1, 12-2, 14-1, 14-2, 16-1, 16-2, 34), the geographical position (P) of the respective component's installation location is ascertained by combining at least two different position-finding methods.

8. Method according to Claim 7,
**characterized in that** a first position-finding method, particularly the radio position-finding, is used to ascertain a geographical position for a reference location (38) which is at a distance from the respective component's installation location, and the ascertained position of this reference location is then taken as a basis for using a second position-finding method, particularly inertial position-finding, to ascertain the geographical position (P) of the respective component's installation location.

9. Method according to Claim 8,
**characterized in that** the reference location chosen is a location close to the building, preferably a building entrance (38), which is situated outside the interior spaces of the building (10) in which the respective component is installed.

10. Method according to one of Claims 1 to 9,
**characterized in that** for at least a portion of the components (12-1, 12-2, 14-1, 14-2, 16-1, 16-2, 34), the geographical position (P) of the respective component's installation location is ascertained as a three-dimensional position.

11. Method according to one of Claims 1 to 10,
**characterized in that** for at least a portion of the components (12-1, 12-2, 14-1, 14-2, 16-1, 16-2, 34), the ascertained geographical position (P) of the respective component's installation location is stored in association with the respective component's identification identifier (K) in a common management centre (18, 20) for this portion of the components.

12. Method according to one of Claims 1 to 11,
**characterized in that** for at least a portion of the components (12-1, 12-2, 14-1, 14-2, 16-1, 16-2, 34), the ascertained geographical position (P) of the respective component's installation location is stored, if desired in association with the respective component's identification identifier (K), in an electronic memory in this component, each component in this portion being set up to communicate its geographical position (P) stored in the memory, if desired together with its identification identifier (K), to at least one other of the components and/or to a control centre (18, 20) for buildings control or consumption metering and/or to an alarm centre (36) using a signalling link (32).

13. Method according to Claim 11 or 12,
**characterized in that** the ascertained geographical position (P) of the installation location of the respective component (12-1, 12-2, 14-1, 14-2, 16-1, 16-2, 34) is buffer-stored in a mobile electronic buffer store (28) and is then transmitted from the buffer store (28) to the management centre (18, 20) via an electrical or optical or radio interface or is written to the memory in the component.

14. Method according to one of the preceding claims,
**characterized in that** at least one of the components is an alarm sensor (34) which is set up so that, in the event of an alarm, it sends its geographical position data together with an alarm signal to an alarm centre (36) using a communication link, allowing auxiliary personnel to be guided to the alarm point (at 34) on the basis of the transferred position data.

## Revendications

1. Procédé pour la gestion d'une multitude de composants (12-1, 12-2, 14-1, 14-2, 16-1, 16-2, 34) de commande des bâtiments et/ou de calcul de consommation dans des bâtiments, avec lequel pour chacun de ces composants (12-1, 12-2, 14-1, 14-2, 16-1, 16-2, 34) une information sur l'emplacement (P) du lieu de montage du composant concerné dans le bâtiment (10) est enregistrée en association avec un code d'identification (K) pour ce composant, **caractérisé en ce que** pour chaque composant (12-1, 12-2, 14-1, 14-2, 16-1, 16-2, 34) une position géographique (P) du lieu de montage du composant concerné est déterminée par des moyens de localisation (26, 40) en particulier portables et **en ce que** cette position géographique (P) est enregistrée en tant qu'information sur l'emplacement en association avec le code d'identification (K) du composant concerné.

2. Procédé selon la revendication 1, **caractérisé en ce que** pour au moins une partie des composants (12-1, 12-2, 14-1, 14-2, 16-1, 16-2, 34), en particulier pour chaque composant, la détermination de la position géographique (P) du lieu de montage du composant concerné repose au moins en partie sur une radiolocalisation.

3. Procédé selon la revendication 2, **caractérisé en ce que** la radiolocalisation est réalisée en employant un système de navigation assisté par satellite.

4. Procédé selon la revendication 2 ou 3, **caractérisé en ce que** la radiolocalisation est réalisée en employant un réseau de télécommunication sans fil.

5. Procédé selon l'une quelconque des revendications 1 à 4, **caractérisé en ce que**, pour au moins une partie des composants (12-1, 12-2, 14-1, 14-2, 16-1, 16-2, 34), la détermination de la position géographique (P) du lieu de montage du composant concerné repose au moins en partie sur une localisation inertielle.

6. Procédé selon la revendication 5, **caractérisé en ce que** l'on emploie pour la localisation inertielle un système gyroscopique mécanique et/ou optique.

7. Procédé selon l'une quelconque des revendications 1 à 6, **caractérisé en ce que**, pour au moins une partie des composants (12-1. 12-2, 14-1, 14-2, 16-1, 16-2, 34), on combine au moins deux procédés de localisation différents pour déterminer la position géographique (P) du lieu de montage du composant concerné.

8. Procédé selon la revendication 7, **caractérisé en ce que**, au moyen d'un premier procédé de localisation, en particulier au moyen de la radiolocalisation, on détermine une position géographique pour un lieu de référence (38) situé à une distance du lieu de montage du composant concerné et qu'à partir de cette position déterminée de ce lieu de référence on détermine ensuite au moyen d'un deuxième procédé de localisation, en particulier une localisation inertielle, la position géographique (P) du lieu de montage du composant concerné.

9. Procédé selon la revendication 8, **caractérisé en ce que** l'on choisit comme lieu de référence un lieu proche du bâtiment, de préférence une entrée de bâtiment (38), situé en dehors des pièces internes du bâtiment (10) dans lequel est installé le composant concerné.

10. Procédé selon l'une quelconque des revendications 1 à 9, **caractérisé en ce que**, pour au moins une partie des composants (12-1, 12-2, 14-1, 14-2, 16-1, 16-2, 34), la position géographique (P) du lieu de montage du composant concerné est déterminée en tant que position tridimensionnelle.

11. Procédé selon l'une quelconque des revendications 1 à 10, **caractérisé en ce que**, pour au moins une partie des composants (12-1, 12-2, 14-1, 14-2, 16-1, 16-2, 34), la position géographique (P) déterminée du lieu de montage du composant concerné est enregistrée en association à son code d'identification (K) dans une centrale de gestion commune (18, 20) pour cette partie des composants.

12. Procédé selon l'une quelconque des revendications 1 à 11, **caractérisé en ce que**, pour au moins une partie des composants (12-1, 12-2, 14-1, 14-2, 16-1, 16-2, 34), la position géographique déterminée (P) du lieu de montage du composant concerné est enregistrée, dans le cas le plus souhaité, en association à son code d'identification (K) dans une mémoire électronique de ce composant, chaque composant de cette partie étant conçu afin de communiquer sa position géographique (P) enregistrée dans la mémoire, dans le cas le plus souhaité conjointement à son code d'identification (K), via une liaison de signaux (32) au moins à un autre des composants et/ou à un poste de contrôle (18, 20) pour la commande du bâtiment ou le calcul de consommation et/ou à une centrale d'alarme (36).

13. Procédé selon la revendication 1 1 ou 12, **caractérisé en ce que** la position géographique déterminée (P) du lieu de montage du composant concerné (12-1, 12-2, 14-1, 14-2, 16-1, 16-2, 34) est enregistrée provisoirement dans une mémoire temporaire électronique portable (28) et qu'elle est ensuite transmise de la mémoire temporaire (28) via une interface électrique ou optique ou radioélectrique à la centrale de gestion (18, 20), ou écrite dans la mémoire du composant.

14. Procédé selon l'une quelconque des revendications 1 à 13, **caractérisé en ce que** au moins un des composants est un capteur d'alarme (34) qui est conçu de sorte à envoyer, en cas d'alarme, ses données géographiques de position conjointement à un message d'alarme via une liaison de communication à une centrale d'alarme (36) de sorte que le personnel de secours puisse être guidé au point d'alarme (en 34) à l'aide des données de position transmises.
